Europäisches Patentamt

European Patent Office

Office européen des brevets

(11) Publication number: **0 220 340**
**A1**

(12) **EUROPEAN PATENT APPLICATION**

(21) Application number: 85201753.2

(51) Int. Cl.⁴: **C01D 7/12**

(22) Date of filing: 29.10.85

(43) Date of publication of application:
06.05.87 Bulletin 87/19

(84) Designated Contracting States:
**AT BE CH DE FR GB IT LI**

(71) Applicant: **AKZO N.V.**
**Velperweg 76**
**NL-6824 BM Arnhem(NL)**

(72) Inventor: **van Lotringen, Theodorus Johannes Maria**
**De Houtmanstraat 79**
**NL-6826 PG Arnhem(NL)**
Inventor: **van den Berg, Gerrit**
**Kievitstraat 24**
**NL-7491 CN Delden(NL)**

(74) Representative: **Sieders, René et al**
**P.O. Box 314**
**NL-6800 AH Arnhem(NL)**

(54) **Process for the preparation of dense soda ash.**

(57) Dense soda ash is produced by the thermal decomposition above 135°C of sodium bicarbonate in an aqueous sodium carbonate slurry and separating ahydrous carbonate from the mother lye. To prevent scaling of the heat providing walls the hydrostatic height above the heating walls should be kept above a certain defined minimum, which at a decomposition temperature of 150°C or higher is preferably at least 10 metres.

EP 0 220 340 A1

## Process for the preparation of dense soda ash

The invention relates to a process for the preparation of high density anhydrous sodium carbonate, so-called dense soda ash. The preparation is carried out by thermal decomposition of sodium bicarbonate or a sodium bicarbonate-containing compound, wherein the sodium bicarbonate or the sodium bicarbonate-containing compound is fed to a reactor containing an aqueous slurry of sodium carbonate which is circulated through a heat exchanger and kept at a decomposition temperature above 135°C and the resulting anhydrous sodium carbonate is discharged while in suspension and subsequently separated from the mother liquor.

A process of the type indicated above is disclosed in U S 3 451 767.

It permits the preparation by the wet route and in one step of a dustless endproduct (dense soda ash) at relatively low power cost. In actual practice the bicarbonate feed is generally supplied from an ammonia-soda plant. A further advantage to this process then consists in that the carbon dioxide resulting from the decomposition is under a pressure such that it is suitable for direct return to the ammonia-soda plant without recompression. Furthermore, it is possible to keep the sodium chloride content of the endproduct very low by recycling a small quantity of mother liquor to the ammonia-soda plant. A drawback to these well-known and similar processes, however, is that they invariably present the problem of scaling of the heat transferring walls. This scaling has first of all to do with the fact that the solubility of soda ash greatly decreases upon increasing the temperature, it being necessary yet to supply a great deal of heat to the soda ash supersaturated solution.

In US 3 451 767 the alternate use of two heat exchangers is therefore recommended.

This is not only costly, but in a system which uses slurry the plant will have to be regularly stopped to permit removing deposits in the heat exchanger, which is of course objectionable in actual practice.

Well-known precautions against the deposition of scale include the use of smooth walls, a low temperature difference across the wall, sufficient (liquid) pressure to prevent boiling at the wall, a relatively high slurry density and a high flow rate past the wall.

It has been found that all these precautions are reasonably effective in the crystallization of anhydrous sodium carbonate from a pure sodium carbonate solution. But as soon as the solution contains bicarbonate, these precautions appear incapable of preventing scaling. Apparently, there is still another interfering factor.

It has now been found that the present process can be so carried out that scaling can yet be prevented.

According to the invention the process is characterized in that the reactor and the heat exchanger are so positioned relative to each other that the static height H of the aqueous slurry above the heat exchanger satisfies the relation

$$H \geq \frac{e^{\left(20,52 - \frac{0,937 \times s}{t} - \frac{10184}{t + 388,2}\right)} - p}{0,1 \times d} \quad \text{metres}$$

where

t = wall temperature of the heat exchanger in °C

s = content of any dissolved salts present in addition to carbonate and bicarbonate, calculated as NaCl in % by weight

p = vapour pressure in bar developed by the system

d = density of the aqueous slurry in g/cm$^3$

2

By static height is to be understood here the difference in height between the critical point of the heat exchanger and the vapour/liquid level, corrected for vapour bubbles, as may be measured through a gauge glass and corrected for the flow resistance between the heat exchanger and the vapour/liquid level.

Actually, the above relation should be satisfied for each point of the heat exchanger. The critical point now is the point of the heat exchanger which leads to the highest vapour/liquid level in an absolute sense. Depending on the construction the critical point may be the top of the heat exchanger (in the case of an upward flow), the hottest point (in the case of a horizontal position of the heat exchanger), or a point in between (in the case of a multipass heat exchanger).

Upon further investigation it has been found that the presence of bicarbonate in the system may be attended with the formation of double salts, such as Wegscheider salt ($Na_2CO_3.3NaHCO_3$), which upon contact with the hot wall will give rise to additional decomposition phenomena. In all probability this decomposition results in the formation of very fine anhydrous sodium carbonate particles which will readily adhere to the wall and lead to scaling.

It has now been found that this decomposition can be prevented by ensuring that the slurry at the hot wall is under sufficient pressure. As for reasons of economy the present process must be carried out under practically autogenous pressure, this additional precaution leads to maintaining a sufficient static height. Various factors appear to be of influence on the minimum static height to be adhered to. Of importance are in particular the temperature of the wall, the vapour pressure developed by the system, any additional salt contained in the slurry and the density of the slurry. Moreover, the decomposition temperature in the bulk of the slurry and the difference in temperature across the wall appear in their turn to be of influence on the above factors.

A further evaluation of these effects, which need not necessarily be independent of each other, has led to the above empirical relation, leaving a necessary margin of safety for practical reasons. In this relation, which is to be satisfied by the static height H, are four quantities that can be properly measured directly, viz. the wall temperature t, any additional salt contents, the autogenous pressure p, and the slurry density d.

As to the salt contents it should be noted that in actual practice the bicarbonate feed is usually obtained from an ammonia soda plant. This feed generally contains contaminations in the form of sodium chloride, sodium sulphate, ammonium salts and potassium salts. Recycling the mother liquor may cause these contaminations in the carbonate slurry to increase from a few tenths per cent to 5% by weight or higher, expressed as NaCl percentage. An increase in foreign salt content has an appreciable effect on possible decomposition at the wall and the autogenous pressure and thus the relation prescribed contains a correction term therefor.

The decomposition temperature is generally above 135°C.

The optimum decomposition temperature is mainly governed by the need for the removal in vapour form of both the reaction water and the water introduced along with the bicarbonate slurry. The lower the water content of the feed, the higher will be the decomposition temperature, but the lower will be the energy supply for the evaporation.

Preferably the decomposition temperature is set to 150°C or higher and a static height of at least 10 metres is maintained. The decomposition temperature is generally not higher than 200°C. The vapour developed by the system is mainly formed by water vapour and carbon dioxide. It is preferred that the process conditions should be chosen such that the proportions of water vapour and carbon dioxide developed correspond to the feed. Of further advantage is the use of a temperature level such that the vapour pressure is at least 4 bar, so that the carbon dioxide developed can be fed to the production towers of an ammonia-soda plant without recompression.

Considering the static height required, the process of the invention is advantageously conducted in a reactor provided with an external heat exchanger, which is placed in a sufficiently low position and connected to the reactor via a by-pass and a pump. For example, the bicarbonate feed may be connected to said by-pass at a suitable point and a second by-pass may be used between the reactor and a draining device to permit separation of the resulting anhydrous carbonate from the mother liquor and recycling thereof. The vapour developed is discharged and with the aid of available heat it may be freed from, int.al., water vapour in a cooler, leaving carbon dioxide for further use. The process of the invention will be further described in the following examples.

Example I

In a reactor which via a by-pass and a pump was connected to a heat exchanger an aqueous slurry of sodium carbonate was kept at an operating temperature of about 150°C by circulation through the heat exchanger. The reactor was provided with a vapour discharge line and a second by-pass for separating the product and recycling the mother liquor.

A suspension of technical sodium bicarbonate from an ammonia-soda plant was fed to the reactor over a period of 13,5 hours, and with discharge of the vapour developed (mainly water vapour, carbon dioxide and some ammonia) and separation of anhydrous sodium carbonate crystals formed the composition of the mother liquor was kept practically constant.

In this experiment the following operating data applied:

autogenous pressure (p)        4,15 bar

static height (H)          11,1  m

wall temperature (t)          154,7  °C

salt content (s)          0,55 %

slurry density (d)          1,325 g/cm³

All usual conditions to prevent scaling had been met. During the experiment the transfer of heat was nevertheless found to decrease considerably.

After 13,5 hours the experiment was interrupted and the heat exchanger inspected. It was found that 76% of its pipes showed scaling to a degree which would have led to the system being completely blocked up, had the experiment been continued.

When the experiment was conducted under the same conditions, but without bicarbonate being supplied it was found possible for a sodium carbonate suspension to be concentrated by evaporation with crystallization from it of anhydrous sodium carbonate for a practically unlimited time without there being any decline in heat transfer. To prevent boiling at the pipe wall the static height required was only 4,4 metres.

Evidently, the presence of bicarbonate constitutes an additional factor contributing to scaling, which in the present case had been insufficiently eliminated despite the use of a greatly increased static height.

Calculation of the required static height with the relation according to the invention teaches that H should have been at least 12,47 m.


Example II

After the equipment had been thoroughly cleaned, the experiment of Example I was repeated with the temperature difference across the heat exchanger being set slightly lower.

The operating data on this experiment were as follows:

autogenous pressure (p)        4,15 bar

static height (H)          10,9  m

wall temperature (t)          152,4  °C

salt content (s)          0,56 %

slurry density (d)          1,332 g/cm³

4

From the relation according to the invention it follows that in this case the minimum static height required is 9,05 m. After 31 hours' continuous operation the equipment was inspected and the pipes of the heat exchanger were still found to be perfectly clean.

**Claims**

1. A process for the preparation of high density anhydrous sodium carbonate by thermal decomposition of sodium bicarbonate or a sodium bicarbonate-containing compound, wherein the sodium bicarbonate or the sodium bicarbonate-containing compound is fed to a reactor containing an aqueous slurry of sodium carbonate which is circulated through a heat exchanger and kept at a decomposition temperature above 135°C and the resulting anhydrous sodium carbonate is discharged while in suspension and subsequently separated from the mother liquor, characterized in that the reactor and the heat exchanger are so positioned relative to each other that the static height H of the aqueous slurry above the heat exchanger satisfies the relation:

$$H \geq \frac{e^{\left(20,52- \frac{0,937 \times s}{t} - \frac{10184}{t + 388,2}\right)} - p}{0,1 \times d} \quad \text{metres}$$

where

t = wall temperature of the heat exchanger in °C

s = content of any dissolved salts present in addition to carbonate and bicarbonate, calculated as NaCl in % by weight

p = vapour pressure in bar developed by the system

d = density of the aqueous slurry in g/cm³

2. A process according to claim 1, characterized in that at a decomposition temperature of 150°C or higher the static height is maintained at at least 10 metres.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-3 451 767 (W.C.SAEMAN et al.) <br> * Claims 1,8 * <br><br> ----- | 1 | C 01 D 7/12 |
|  |  |  | **TECHNICAL FIELDS SEARCHED (Int. Cl.4)** |
|  |  |  | C 01 D 7/00 |

The present search report has been drawn up for all claims

| Place of search | Date of completion of the search | Examiner |
|---|---|---|
| THE HAGUE | 24-06-1986 | SCHUT,R.J. |